# EUROPÄISCHE PATENTSCHRIFT

(11) **EP 1 093 718 B1**
(45) Veröffentlichungstag und Bekanntmachung des Hinweises auf die Patenterteilung: **18.12.2002**
(21) Anmeldenummer: 00125732.8
(22) Anmeldetag: 05.06.1998
(51) Int. Cl.: A01K 9/00, A01K 5/02

(54) **Einrichtung zum Zuführen von Nahrungsmittel für Haustiere**
Device for supplying feed to domestic animals
Dispositif pour la distribution de nourriture ä des animaux domestiques

(30) Priorität: 11.06.1997 DE 19724550
(43) Veröffentlichungstag der Anmeldung: 25.04.2001
(62) Teilanmeldung aus: 98929423.6
(73) Patentinhaber: Förster, Martin, 78234 Engen (DE)
(72) Erfinder: Förster, Martin, 78234 Engen (DE)
(74) Vertreter: Weiss, Peter, Dr. rer. nat.

(56) Entgegenhaltungen:
- DE-A- 4 404 053
- DE-U- 29 613 366
- GB-A- 2 247 531
- GB-A- 2 281 185
- US-A- 3 946 703
- US-A- 4 182 273
- US-A- 5 207 251
- US-A- 5 231 953

## Beschreibung

Die vorliegende Erfindung betrifft eine Einrichtung zum Zuführen von flüssigen Nahrungsmittel für Haustiere, insbesondere Kälber oder Lämmer mit einer Entnahmestelle, insbesondere Getränkeschale oder Saugstelle und zumindest einer Nahrungsmittelquelle.

Derartige Einrichtungen sind heutzutage in vielfältiger Form und Ausführung auf dem Markt bekannt und gebräuchlich. Sie dienen zur Fütterung von Haustieren, insbesondere Jungtieren, wie Kälber, Lämmer und Ferkel.

Aus dem Stand der Technik ist eine Vorrichtung zum Herstellen von verschiedenen Flüssigkeitskonzentraten, für Kälbermilch nach der DE-OS 15 57 243 bekannt. Hier wird aufwendig einem Mixbehälter sowohl Wasser, als auch Milchpulver zugeführt. Dabei wird ein Zusatz-Wasserbehälter mit einem weiteren Wasserbehälter verbunden, welcher an eine Mischeinrichtung anschliesst. Diese ist dann über eine Zuführungsleitung mit mindestens einem weiteren Sauger verbunden. Nachteilig daran ist, dass kein exakter Einfluss auf eine bestimmte Mengenregelung und Vermischung von Nahrungsmittel genommen werden kann. Auch eine Temperaturregelung ist hier nicht vorgesehen.

Ferner ist aus dem Stand der Technik nach der CH 680 635 ein Verfahren und eine Vorrichtung zur Versorgung von Vieh mit Medikamenten bekannt, wobei über zwei separate Leitungen zwei verschiedene Nahrungsmittel einem Sauger zugeführt werden. Dort ist ein Medikamenten-Behälter separat mit dem Sauger verbunden und führt diesem direkt Nahrungsmittel zu. Auch das Tränkbecken schliesst an den Sauger direkt an. Nachteilig ist hier, dass ein Durchmischen von Nahrungsmittel nur schwer möglich ist. Zudem können die Mengen nicht exakt bestimmt werden, wenn beispielsweise bei unterschiedlicher Saugweise eines Tieres unterschiedlich gesaugt wird.

Die US 4,182,273 beschreibt eine Vorrichtung zum Zuführen von Nahrungsmittel für Tiere, wobei das Nahrungsmittel aus einem Behälter in eine Nahrungsmittelschale eingegeben wird. In die Nahrungsmittelschale ragt ein Schalter ein, um bei Erreichen eines vorherbestimmten Befüllzustandes die Nahrungsmittelzufuhr zu unterbrechen.

Die DE 296 13 366 beschreibt eine Einrichtung zum Versorgen von Haustieren mit einem flüssigen Nahrungsmittel, wobei einem Ventil oder einer Förderpumpe ein Unterdrucksensor vor der Saugstelle in die Schlauchleitung eingesetzt ist, um bei einem bestimmten Unterdruck die Nahrungsmittelzufuhr zur Entnahmestelle, insbesondere zu einem Saugnuckel einzuschalten.

Der vorliegenden Erfindung liegt die Aufgabe zugrunde, eine Einrichtung der oben genannt Art zu schaffen, mit welcher auf sehr exakte Weise eine Mengenmessung, eine gute Durchmischung, sowie eine optimierte Steuerung möglich ist, wobei auch Einfluss auf das Tränkeverhalten eines Jungtieres genommen werden soll. Zudem soll eine derartige Einrichtung sehr kostengünstig herzustellen sein.

Zur Lösung dieser Aufgabe führt, dass zwischen der Entnahmestelle und den Nahrungsmittelquellen in zumindest einer Leitung ein Drucksensor eingesetzt ist, wobei der Drucksensor zum Bestimmen eines Befüllungszustandes der Entnahmestelle mit einer Steuerung verbunden ist.

Mit der vorliegenden Erfindung ist eine Einrichtung geschaffen, welche auch ein Zuführen von unterschiedlichen Nahrungsmitteln aus unterschiedlichen Quellen optimiert. Dabei münden Zuleitungen der einzelnen unterschiedlichen Nahrungsquellen in einen gemeinsamen Puffer.

Als Nahrungsmittelquellen können auch Warm- und/oder Kaltwasserleitungen verwendet werden. Ein automatisierter Einfluss auf das Mischungsverhältnis und auf die Temperatur des Nahrungsmittels ist möglich. Hier kann eine Warm- bzw. Kaltwasserleitung über eine entsprechende Mischbatterie mit dem Puffer verbunden sein, wobei die Mischbatterie ebenfalls über die Steuerung regelbar ist.

In einem Ausführungsbeispiel sind alle einzelnen Zuleitungen separat mit der Entnahmestelle verbunden. Ist eine derartige Entnahmestelle, beispielsweise als Tränkeschale ausgebildet, so greifen von unten die einzelnen Leitungen an diese an. Zur Bestimmung des Füllstandes dieser Getränkeschale ist in einer der Zuleitungen ein Drucksensor eingesetzt, welcher ebenfalls mit einer Steuerung verbunden ist. Der Drucksensor gibt an, in welchem Befüllzustand sich diese Schale bzw. Entnahmestelle befindet. Wird diese ausgesoffen, so nimmt der Druck sehr rasch ab und die einzelnen in den Zuleitungen eingesetzten Elemente, wie Pumpen und Magnetventile werden wieder von der Steuerung aktiviert und befördern Nahrungsmittel aus den Nahrungsmittelquellen in die Getränkeschale.

In einem weiteren Ausführungsbeispiel der vorliegenden Erfindung sind die Entnahmestelle sowie die Nahrungsmittelquelle über eine gemeinsame Zuleitung ständig verbunden und in einer gemeinsamen Ebene angeordnet. Hier können jedoch auch eine Mehrzahl von derartigen Nahrungsmittelquellen in der gemeinsamen Ebene mit der Entnahmestelle verbunden sein. Die Zuleitungen sind bevorzugt in Bodennähe angeordnet. Wichtig ist hier, dass zumindest ein Behälter bzw. zumindest eine Nahrungsmittelquelle mit einem erfindungsgemässen Sensorelement versehen ist. Dieses zeigt den Befüllzustand des Nahrungsmittels an, wenn beispielsweise das Tier die Entnahmestelle aussäuft. Dann kann ggf. jede Nahrungsmittelquelle wieder erneut mit einer gewünschten Menge an Nahrungsmittel befüllt werden. Das Sensorelement ist mit einer Steuerung verbunden, welche mit einem Tränkeautomaten od.dgl. in Verbindung steht. Auch ist hier denkbar, die Entnahmestelle, insbesondere die Tränkeschale derart auszubilden, dass über entsprechende Schottwände mit in Bodennähe vorgesehenen Öffnungen Teilbereiche in der Entnahmestelle entstehen, welche ggf. auch mit unterschiedlichen Nahrungsmitteln befüllt werden können. Das Sensorelement wird in den abgeschotteten Teilbereichen plaziert, um den Befüllungszustand der Entnahmestelle zu steuern bzw. zu ermitteln. Auch hier kann das Tier den in einem anderen, nicht zugänglichen Teil der Entnahmestelle, den angeordneten Sensor bzw. das Sensorelement nicht zerstören oder beschädigen.

Im Rahmen der vorliegenden Erfindung liegt auch, dass ein Temperatursensor der Nahrungsmittelquelle und/oder der Entnahmestelle zugeordnet ist. Jeder Temperatursensor ist dann mit der Steuerung verbunden. Über diesen lässt sich dann die Temperatur an jeder gewünschten Stelle bestimmen und/oder regeln.

Insgesamt ist mit der Erfindung eine Einrichtung geschaffen, mit welcher auf unterschiedlichste Weise sehr präzise und exakt unterschiedliche Nahrungsmittel einer Entnahmestelle zugeführt werden können. Dabei können auch Zusätze, wie Medizin, Vitamine, Kraftfutter und dgl. separat oder je nach Bedarf des Kalbes zugefüttert werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematische Darstellung einer erfindungsgemässen Anschlussmöglichkeit von mehreren Anschlüssen an eine Tränkeschale;
Figuren 2 und 3 schematische Darstellungen von weiteren Entnahmestellen.

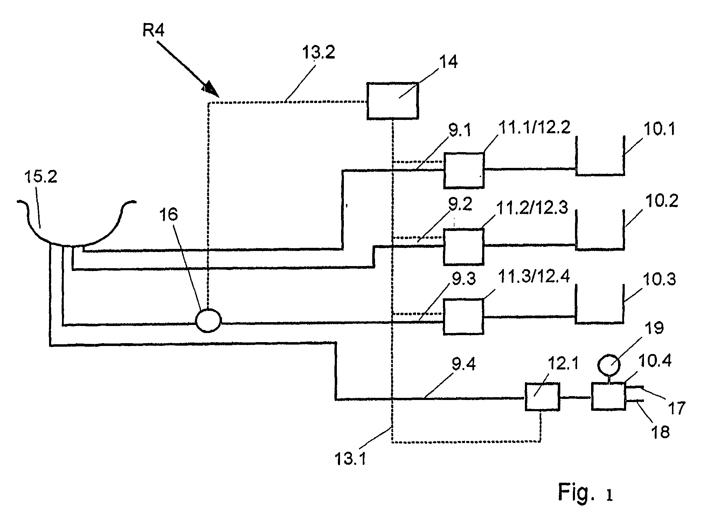

Gemäss Figur 1 ist eine Einrichtung R₄ dargestellt, bei welcher die einzelnen Zuleitungen 9.1 bis 9.4 direkt mit der Entnahmestelle 15.2 verbunden sind. Diese greifen bevorzugt in einen Boden der Entnahmestelle 15.2 ein. Über einen einzigen Drucksensor 16, welcher über die Datentleitung 13.2 mit der Steuerung 14 verbunden ist, lässt sich der Druck, welcher in der Entnahmestelle 15.3 bzw. in der Tränkeschale herrscht, exakt bestimmen. Ferner sind Pumpen 11.1 bis 11.3 sowie Ventile 12.1 bis 12.4 in die Zuleitungen 9.1 bis 9.4 eingesetzt, die ebenfalls mit der Steuerung 14 in Verbindung stehen. Hierdurch ist es möglich, den Befüllstand der Entnahmestelle 15.2 bzw. der Tränkeschale exakt zu bestimmen und zu regulieren. Fällt der Druck in der Tränkeschale ab, so gibt der Durcksensor 16 ein entsprechendes Signal an die Steuerung 14. Diese betätigt die Pumpen 11.1 bis 11.3 bzw. Magnetventile 12.1 bis 12.4 der einzelnen Nahrungsmittel-quellen 10.1 bis 10.4, so dass erneut Nahrungsmittel in einer gewünschten Menge, Temperatur und Mischung in die Tränkeschale bzw. der Entnahmestelle 15.2 zugeführt wird.

Im Rahmen der vorliegenden Erfindung soll auch hier liegen, dass beispielsweise ein Kaltwasseranschluss sowie ein Warmwasseranschluss 17, 18 als Nahrungsmittelquelle 10.4 vorgesehen sein kann. Diese kann mit einem Manometer 19 bestückt sein, um den herkömmlichen Wasserdruck zu minimieren und die maximale Durchflussmenge zu begrenzen. Jeder Wasseranschluss 17, 18 kann direkt mit der Entnahmestelle 15.1 bis 15.3 verbunden sein. Diese sind, wie oben beschrieben über die Steuerung 14 mittels Ventilen 12.1 bis 12.4 ansteuerbar. Auch soll hier daran gedacht sein, eine steuerbare Mischbatterie für Kaltwasser- und Warmwasserleitungen vorzusehen. Das Wasser als Nahrungsquelle sowie die Warm- oder Kaltwasserleitungen 17, 18 können auch im separaten Einsatz zum Reinigen des Puffers 1 und/oder der Entnahmestelle 15.1 bis 15.3 eingesetzt werden.

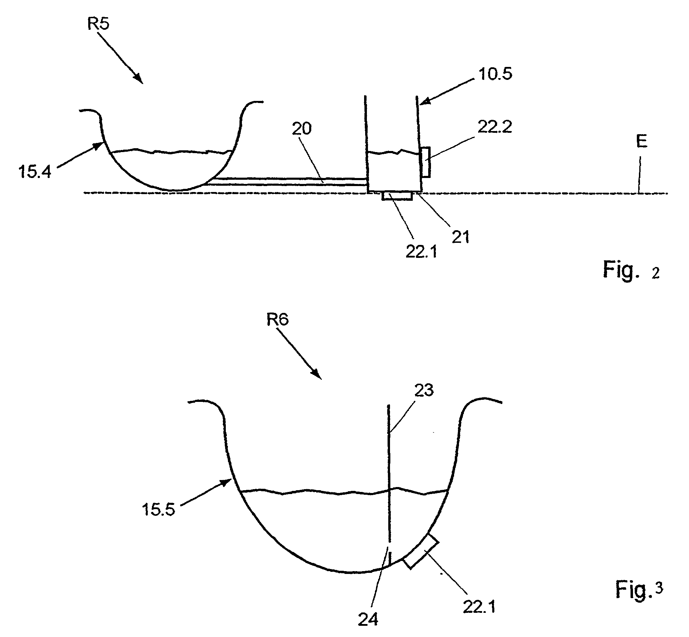

In einem weiteren Ausführungsbeispiel der vorliegenden Erfindung gemäss Figur 2 ist eine weitere Entnahmestelle 15.4 einer weiteren Einrichtung R₅ dargestellt. Diese ist permanent über eine Verbindungsleitung 20 mit einer weiteren Nahrungsmittelquelle 10.5 verbunden. Die Nahrungsmittelquelle 10.5 und die Entnahmestelle 15.4, welche hier bevorzugt als Tränkeschale ausgebildet ist, sind in einer gemeinsamen Ebene E angeordnet. Die Verbindungsleitung 20 ist bevorzugt nahe der Bodenflächen mit den jeweiligen Behältern verbunden. Denkbar ist hier, dass ein Magnetventil in die Verbindungsleitung 20 eingesetzt sein kann. Bevorzugt ist jedoch die Verbindungsleitung 20 zwischen der Entnahmestelle 15.4 und der Nahrungsmittelquelle 10.5 immer geöffnet. Wird Nahrungsmittel aus der Entnahmestelle 15.4 entnommen, so nimmt durch die Verbindungsleitung 20 ebenfalls der Flüssigkeitspegel entsprechend dem Pegel der Entnahmestelle 15.4 ab. So fliesst auf diese Weise Nahrungsmittel aus der Nahrungsmittelquelle 10.5 direkt in die Entnahmestelle 15.4.

Wesentlich ist hier auch, dass entweder der Entnahmestelle 15.4 und bevorzugt der Nahrungsmittelquelle 10.5 an einer Bodenfläche 21 ein Sensorelement 22.1 oder ein seitliches Sensorelement 22.2 angeordnet ist. Wird beispielsweise die Entnahmestelle 15.4 von einem Kalb leergesoffen, so wird in dem Sensorelement 22.1 oder 22.2 ein Signal erzeugt, welches einer Steuerung mitteilt, dass die Entnahmestelle 15.4 bzw. die Nahrungsmittelquelle 10.5 leergesoffen ist. Somit kann der Nahrungsmittelquelle 10.5 wieder Nahrungsmittel zugeführt werden. Die Menge, welche hier zugegeben wird, ist selbstverständlich wählbar bzw. bestimmbar. Die Sensorelemente 22.1 bzw. 22.2 können jedoch auch an der Entnahmestelle 15.4 angeordnet sein.

Diese können auch jedoch mit der Nahrungsmittelquelle 10.5 verbunden sein. Somit ist die Entnahmestelle 15.4 frei von einem Sensor. Als Sensoren kommen alle unterschiedlichen Sensoren in Betracht, welche zur Mengenmessung geeignet sind. Es können Drucksensoren, sowie Lichtsensoren, induktive oder kapazitive Sensoren, sowie Ultraschallsensoren oder Sensoren mit Membranen od. dgl. Anwendung finden. Auch eine einfache Elektrode ist hier denkbar.

Im Rahmen der vorliegenden Erfindung soll jedoch auch hier liegen, dass in der Ebene E auch weitere, hier nicht dargestellte Nahrungsmittelquellen an die Entnahmestelle 15.4 angeschlossen sein können. Somit kann beispielsweise mittels mehreren Behältern unterschiedliche Nahrungsmittel in unterschiedlichen Mengen exakt der Entnahmestelle 15.4 zugeführt werden.

In einem weiteren Ausführungsbeispiel der vorliegenden Erfindung gemäss Figur 3 ist eine Entnahmestelle 15.5 dargestellt, welche als herkömmliche Tränkeschale ausgebildet ist. Die Entnahmestelle ist 15.5 ggf. durch mehrere Schottwände 23 in verschiedene Teilbereiche getrennt. Die einzelnen Teilbereiche der Entnahmestelle 15.5 stehen miteinander durch Öffnungen 24 in Verbindung. Die Funktionsweise ist ebenfalls die oben beschriebene.

Wird das Nahrungsmittel aus dem äusseren Teil der Entnahmestelle 15.4 ausgesoffen, so fällt in den anderen und bzw. übrigen Teil ebenfalls der Pegel an Nahrungsmittel ab. Ist ein bestimmter Mindestpegel erreicht bzw. ist die Entnahmestelle 15.4 leergesoffen, so übermittelt das Sensorelement 22.1 ein entsprechendes Signal an eine hier nicht dargestellte Steuerung, so dass erneut, wenn es gewünscht wird, Nahrungsmittel der Entnahmestelle 15.5 bzw. den einzelnen Teilbereichen zugeführt werden kann.

## Patentansprüche

1. Einrichtung zum Zuführen von flüssigen Nahrungsmittel für Haustiere, insbesondere Kälber oder Lämmer mit zumindest einer Entnahmestelle (15.1 bis 15.3), insbesondere Tränkeschale oder Saugstelle und einer Mehrzahl von Nahrungsmittelquellen (10.1 bis 10.4),
**dadurch gekennzeichnet,**
**dass** zwischen der Entnahmestelle (15.1 bis 15.3) und den Nahrungsmittelquellen (10.1 bis 10.4) in zumindest einer Leitung (13) ein Drucksensor (16) eingesetzt ist, wobei der Drucksensor (16) zum Bestimmen eines Befüllungszustandes der Entnahmestelle (15.2 und 15.3) mit einer Steuerung (14) verbunden ist.

2. Einrichtung nach Anspruch 1, **dadurch gekennzeichnet, dass** zwischen die Entnahmestelle (15.1 bis 15.3) und der Nahrungsmittelquellen (10.1 bis 10.4) eine über die Steuerung (14) ansteuerbare Pumpe (11.1 bis 11.3) und/oder ansteuerbares Ventil (12.1 bis 12.4) eingesetzt ist.

3. Einrichtung nach Anspruch 1 oder 2, **dadurch gekennzeichnet, dass** die Entnahmestelle (15.1 bis 15.4) sowie die zumindest eine Nahrungsmittelquelle (10.1 bis 10.5) in einer Ebene (E) angeordnet sind.

4. Einrichtung nach wenigstens einem der Ansprüche 1 bis 3, **dadurch gekennzeichnet, dass** die Entnahmestelle (15.1 bis 15.4) über zumindest eine Verbindungsleitung (20) mit der Nahrungsmittelquelle (10.1 bis 10.5) permanent verbunden ist.

5. Einrichtung nach wenigstens einem der Ansprüche 1 bis 4, **dadurch gekennzeichnet, dass** der Entnahmestelle (15.1) und/oder der Nahrungsmittelquelle (10.1 bis 10.5) zumindest ein Sensorelement (22.1, 22.2) zugeordnet ist.

6. Einrichtung nach Anspruch 5, **dadurch gekennzeichnet, dass** das Sensorelement (22.1, 22.2) zur Ermittlung und Bestimmung eines Befüllungszustandes der Nahrungsmittelquelle (10.1 bis 10.5) und/oder der Entnahmestelle (15.1 bis 15.4) mit einer Steuerung (14) in Verbindung steht.

7. Einrichtung nach wenigstens einem der Ansprüche 1 bis 6, **dadurch gekennzeichnet, dass** die Entnahmestelle (15.1) mittels zumindest einer Schottwand (23) in zumindest zwei Teile getrennt ist, wobei in der Schottwand (23) eine Öffnung (24) vorgesehen ist, welche einzelne Teilbereiche miteinander, bevorzugt in Bodennähe verbindet.

8. Einrichtung nach Anspruch 7, **dadurch gekennzeichnet, dass** zumindest einem Teilbereich der Entnahmestelle (15.5) das Sensorelement (22.1, 22.2) zugeordnet ist.

## Claims

1. Apparatus for supplying liquid feed for domestic animals, more especially calves or lambs, said apparatus having at least one extraction point (15.1 to 15.3), more especially a drinking trough or suction point, and a plurality of feed sources (10.1 to 10.4), **characterised in that** a pressure sensor (16) is inserted between the extraction point (15.1 to 15.3) and the feed sources (10.1 to 10.4) in at least one line (13), the pressure sensor (16) being connected to a control device (14) for determining the state of fullness of the extraction point (15.2 and 15.3).

2. Apparatus according to claim 1, **characterised in that** a pump (11.1 to 11.3), which is actuatable via the control device (14), and/or an actuatable valve (12.1 to 12.4) are/is inserted between the extraction point (15.1 to 15.3) and the feed sources (10.1 to 10.4).

3. Apparatus according to claim 1 or 2, **characterised in that** the extraction point (15.1 to 15.4) and the at least one feed source (10.1 to 10.5) are disposed in one plane (E).

4. Apparatus according to at least one of claims 1 to 3, **characterised in that** the extraction point (15.1 to 15.4) is permanently connected to the feed source (10.1 to 10.5) via at least one connection line (20).

5. Apparatus according to at least one of claims 1 to 4, **characterised in that** at least one sensor element (22.1, 22.2) is associated with the extraction point (15.1) and/or the feed source (10.1 to 10.5).

6. Apparatus according to claim 5, **characterised in that** the sensor element (22.1, 22.2) for detecting and determining a condition of fullness of the feed source (10.1 to 10.5) and/or of the extraction point (15.1 to 15.4) communicates with a control device (14).

7. Apparatus according to at least one of claims 1 to 6, **characterised in that** the extraction point (15.1) is divided into at least two parts by at least one partition wall (23), an opening (24), which joins together individual partial areas, preferably in the vicinity of the base, being provided in the partition wall (23).

8. Apparatus according to claim 7, **characterised in that** the sensor element (22.1, 22.2) is associated with at least one partial area of the extraction point (15.5).

## Revendications

1. Installation pour fournir un aliment liquide à des animaux domestiques notamment des veaux ou des agneaux, comportant au moins un point de prélèvement (15.1...15.3), notamment une coupelle d'abreuvoir ou point d'allaitement et plusieurs sources d'aliments (10.1...10.4),
**caractérisée en ce qu'**
entre les points de prélèvement (15.1... 15.3) et les sources d'aliments (10.1...10.4) il est prévu un capteur de pression (16) dans au moins une conduite (13),
le capteur de pression (16) étant relié à une commande (14) pour déterminer le niveau de remplissage des points de prélèvement (15.2 et 15.3).

2. Installation selon la revendication 1,
**caractérisée par**
une pompe commandée (11.1...11.3) par une commande (14) et/ou une vanne commandée (12.1...12.4), entre les points de prélèvement (15.1...15.3) et les sources d'aliments (10.1...10.4).

3. Installation selon l'une quelconque des revendications 1 ou 2,
**caractérisée en ce que**
les points de prélèvement (15.1... 15.4) et au moins une source d'aliments (10.1...10.5) sont installés dans un plan (E).

4. Installation selon l'une quelconque des revendications 1 à 3,
**caractérisée en ce que**
les points de prélèvement (15.1... 15.4) sont reliés de manière permanente par au moins une conduite de liaison (20) à la source d'aliments (10.1...10.5).

5. Installation selon l'une quelconque des revendications 1 à 4,
**caractérisée en ce que**
les points de prélèvement (15.1) et/ou les sources d'aliments (10.1...10.5) sont équipés d'au moins un élément de capteur (22.1, 22.2).

6. Installation selon la revendication 5,
**caractérisée en ce que**
l'élément de capteur (22.1, 22.2) est relié à une commande (14) pour déterminer et définir un état de remplissage des sources d'aliments (10.1...10.5) et/ou des points de prélèvement (15.1...15.4).

7. Installation selon l'une quelconque des revendications 1 à 6,
**caractérisée en ce que**
le point de prélèvement (15.1) est séparé par au moins une cloison (23) en au moins deux parties et la cloison (23) comporte une ouverture (24) par laquelle les différentes zones partielles sont reliées de préférence à proximité du fond.

8. Installation selon la revendication 7,
**caractérisée en ce que**
l'élément de capteur (22.1, 22.2) est associé à au moins une zone partielle du point de prélèvement (15.5).
